# EUROPEAN PATENT SPECIFICATION

(11) **EP 4 461 389 B1**
(45) Date of publication and mention of the grant of the patent: **29.10.2025**
(21) Application number: 24174940.7
(22) Date of filing: 08.05.2024
(51) Int. Cl.: A63F 3/00

(54) **LIGHTWEIGHT LARGE-CAPACITY CARRIER BOX FOR MINIATURE MODELS**
LEICHTE TRANSPORTBOX MIT GROSSEM FASSUNGSVERMÖGEN FÜR MINIATURMODELLE
BOÎTE DE TRANSPORT LÉGÈRE ET DE GRANDE CAPACITÉ POUR LES MODÈLES MINIATURES

(30) Priority: 11.05.2023 CN 202321122945 U
(43) Date of publication of application: 13.11.2024
(73) Proprietor: Yu, Zheng, Shenzhen, Guangdong 518000 (CN)
(72) Inventor: Yu, Zheng, Shenzhen, Guangdong 518000 (CN)
(74) Representative: Zaboliene, Reda

(56) References cited:
- CN-U- 214 876 865
- DE-U1- 29 700 801
- US-A- 6 126 012
- US-B1- 6 276 525

## Description

### FIELD OF TECHNOLOGY

The present invention relates to a storage-carried box, and in particular, to a lightweight large-capacity carrier box for miniature models..

### BACKGROUND

Miniature model boxes used by tabletop wargame players are mainly used for the tabletop game players to carry the tabletop miniature models. In the prior art, a conventional carrying tool is a box with a deformable soft cushion layer (such as a sponge cushion layer, an air bag cushion layer, and the like) inside, and each miniature model is placed independently in independent space partitioned by the soft cushion layer. Such carrying tool can protect the miniature model extremely well by using partition of the soft cushion layer, so that the miniature model is not bumped during carrying. However, an internal space utilization rate of an entire box is extremely low, making it difficult to carry a large quantity of miniature models.

CN214876865U discloses an aviation article box designed for storing and transporting items in aviation kitchens. It features a lightweight structure, movable box door, and positioning grooves and positioning blocks to ensure stable placement when multiple boxes are arranged together. The inner side walls include parallel convex strips, which can support trays, although no specific trays are explicitly disclosed. The box is designed for aircraft crew and passenger service items, with a focus on lightweight construction, easy maintenance, and efficient organization for storage and transfer operations. However, CN214876865U does not address the specific needs of tabletop wargame players, nor does it disclose a magnetically attractive sliding tray system designed to optimize space utilization for storing and securing miniature models.

### SUMMARY

To resolve the above technical problem, the present invention provides a lightweight large-capacity carrier box for miniature models. The box has advantages of light weight, high strength, large capacity, and a high space utilization rate, so that a large quantity of miniature models of tabletop games can be easily carried.

Technical solutions of the present invention are as follows.

A lightweight large-capacity carrier box for miniature models used by tabletop wargame players, including a box body provided with a box door on a circumferential surface. The box body includes several lightweight panels, several goods sliding grooves are symmetrically formed on opposite surfaces of the lightweight panels located on two sides of the box door of the box body, the several goods sliding grooves are disposed in a horizontal direction, a tray is erected between two goods sliding grooves that are symmetrically horizontally arranged, the tray is capable of being pulled and pushed in a direction of the box door, the tray has a tray-shaped structure that is capable, in use, of magnetically attracting a miniature model, and the shape of the tray matches a cross section of the box body. Several small protruding blocks are formed on the lightweight panels on which the goods sliding grooves are located, and the goods sliding grooves are formed between two adjacent rows of small protruding blocks.

Preferably, a height of the several small protruding blocks in a vertical direction is 1-2cm, and a height of each row of small protruding blocks is consistent, and a width of the goods sliding groove is 0.2-0.8cm.

A further technical solution is as follows: the lightweight panel is a hollow double-layer panel, and the box body is formed by splicing several of the double-layer panels, and several reinforcing grooves are formed on inner side surfaces of the double-layer panels, and the several reinforcing grooves are staggered at intervals.

A further technical solution is as follows: the reinforcing grooves have long waist-shaped structures, and the reinforcing grooves are arranged in a same direction on a same double-layer panel.

A further technical solution is as follows: an included angle is formed between an arrangement direction of the several reinforcing grooves located on opposite surfaces of the double-layer panels on both sides of the box door and a length direction of the goods sliding grooves, and the included angle is preferably 90°.

A further technical solution is as follows: the box body has a square box-shaped structure, and the square box-shaped structure includes a left side panel and a right side panel which are oppositely arranged, a rear panel is inserted and assembled at rear ends between the left side panel and the right side panel, a top panel is detachably and firmly connected to tops of the left side panel and the right side panel, a bottom panel is detachably and firmly connected to bottoms of the left side panel and the right side panel, and front ends of the left side panel and/or right side panel are rotatably connected to the box door.

A further technical solution is as follows: end surfaces at the tops and bottoms of the left side panel and the right side panel are respectively pre-embedded with pre-embedded nuts for detachably fastening the top panel and the bottom panel, and the top panel and the bottom panel are respectively in threaded connection with the pre-embedded nuts through threaded connectors.

A further technical solution is as follows: side edges of the top panel and the bottom panel are provided with first threaded connectors protruding toward the left side panel and the right side panel respectively, corresponding positions of the left side panel and the right side panel are provided with counterbores, and it is designed that the second threaded connectors are in threaded connection with the first threaded connectors after passing through the counterbores, so that the left side panel and the right side panel are locked on the top panel and the bottom panel.

A further technical solution is as follows: the lightweight panel is a lightweight plastic foam board, and the box body is integrally formed by several lightweight plastic foam boards.

A further technical solution is as follows: the box door is provided with a transparent window, an illumination light strip is disposed around a periphery of the transparent window on an inner side surface of the box door, and an illumination surface of the illumination light strip is obliquely disposed toward the transparent window.

A further technical solution is as follows: limiting strips that are convex and block-shaped are respectively formed on two inner side surfaces of a top and bottom of the box body, and the limiting strips respectively stop at the top and bottom of inner side surfaces of the box door.

A further technical solution is as follows: chuck grooves are respectively formed at a top end face and a bottom end face of the door panel; and positions on the inner side surfaces of the top and bottom of the box body and corresponding to the chuck grooves are respectively provided with protruding chucks that are convex, and the protruding chucks are capable of being elastically clamped into the corresponding chuck grooves and are limited in the chuck grooves.

A further technical solution is as follows: the box door includes one or two door panels rotatably connected to a lightweight panel on a side surface of the box body, and preferably, the box door includes a front small door opening panel and a front large door opening panel that are rotatably connected to front ends of two opposite lightweight panels of the box body.

A further technical solution is as follows: the top of the box body is positioned with a handle, the handle includes a lifting and holding part and a fastening part, and the fastening part is firmly connected to the top of the box body; and grooves are respectively formed on the inner side surface of the top of the box body and corresponding to two free ends of the lifting and holding part, the two free ends of the lifting and holding parts respectively pass through side walls of the corresponding grooves and are rotatably connected to the fastening part.

Beneficial effects of the present invention are as follows.
1. To consider carrying portability of the carrier box for miniature models, panels of the box body are all lightweight panels, which may include double-layer panels with hollow interior or single-layer light plastic foam panels. In addition, considering the firmness of the box, a large quantity of small protruding blocks is formed on opposite surfaces of the double-layer panels on both sides of the box door of the box body, and the reinforcing grooves are arranged at intervals on the inner side surfaces of the double-layer panels of the box body. Through arrangement of the small protruding blocks and reinforcing grooves on the premise of the overall light weight of the box, the strength of the plastic panel is increased, concave deformation of a flat plastic panel after being stressed is prevented. When the lightweight plastic foam panel is used, an integrated structure is used to increase the strength.
2. In the box body, the small protruding blocks are directly used to form the goods sliding grooves for supporting the tray and pulling and pushing of the tray. A height of the small protruding blocks and a width of the goods sliding grooves are adjusted, so that a height position of the tray in the box can be finely adjusted, to adapt to miniature models with different heights, preventing the waste of space in the box and increasing a space utilization rate in the box.
3. The tray in the box has a tray-shaped structure which can magnetically attract the miniature model. When in use, the miniature model can be magnetically fastened on the tray, to prevent moving collision between the miniature models when the box is carried.

### BRIEF DESCRIPTION OF THE DRAWINGS

FIG. 1 is a first schematic three-dimensional structural diagram according to a first specific embodiment (a box door is opened);
FIG. 2 is a second schematic three-dimensional structural diagram according to the first specific embodiment (a box door is closed);
FIG. 3 is a schematic diagram (an exploded view) of a disassembly and assembly manner for a box according to the first embodiment;
FIG. 4 is a schematic diagram of a connection relationship between a rear panel, a left side panel, and a right side panel according to the first embodiment (a top panel, the left side panel and right side panel, and tops of the rear panel are not shown);
FIG. 5 is a schematic diagram of a rotational connection structure of a front large door opening panel and a front small door opening panel according to the first embodiment (only a part of the front large door opening panel and a part of the front small door opening panel are shown);
FIG. 6 is a schematic structural diagram of a box door equipped with a light strip according to the first embodiment;
FIG. 7 is a schematic side view of an internal structure according to the first embodiment;
FIG. 8 is an enlarged view of a part A in FIG. 7, that is, a schematic structural diagram of cooperation between a protruding chuck and a chuck groove;
FIG. 9 is a schematic structural diagram of a left side panel or right side panel according to a second specific embodiment;
FIG. 10 is a schematic diagram (assembly diagram) of a disassembly and assembly manner for a box according to the second specific embodiment;
FIG. 11 is a schematic diagram (an exploded view) of a disassembly and assembly manner for the box according to the second embodiment;

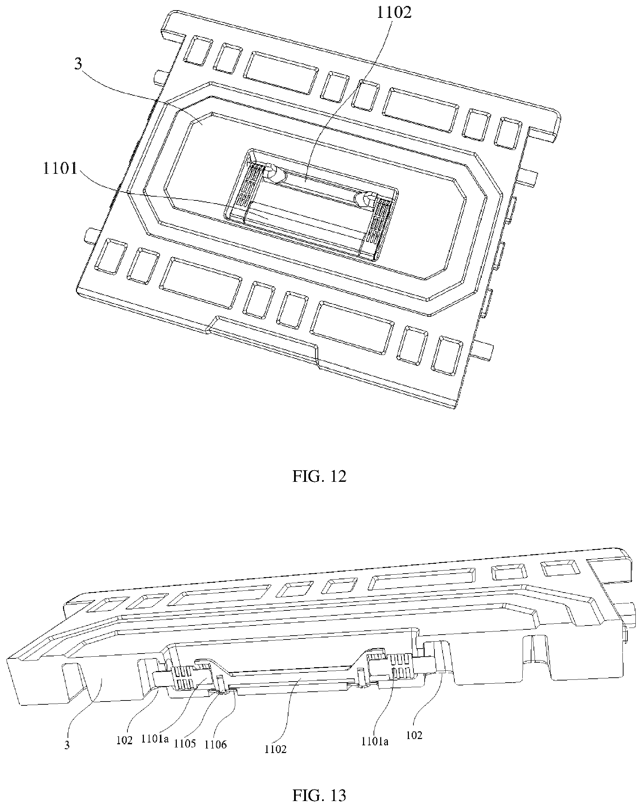

FIG. 12 is a schematic structural view of a combination of a top cover and a handle of the box from a first angle;
FIG. 13 is a schematic structural view of a combination of the top cover and the handle of the box from a second angle; and
FIG. 14 is a schematic structural diagram of a box body according to a third embodiment (a box door is not shown).

In the figures,
100-box body; 200-tray;
1-left side panel; 2-right side panel; 3-top panel; 4-bottom panel; 5-rear panel; 6-box door; 61-front small door opening panel; 62-front large door opening panel; 7-hexagon wrench; 8-Small protruding block; 9-goods sliding groove; 10-reinforcing groove; 11-handle;
101-slot; 102-groove; 103-counterbore;
301-pre-embedded nut; 302-threaded connector; 303-rotating shaft groove; 304-limiting strip; 305- protruding chuck; 306-first threaded connector; 307-second threaded connector;
501-inserted part;
601-rotating shaft; 602-transparent window; 603-chuck groove; 604-illumination light strip; 605-battery box;
1101-lifting and holding part; 1101a-free end of the lifting and holding part; 1102-fastening part; 1105-threaded connector; 1106-gasket.

### DESCRIPTION OF THE EMBODIMENTS

To understand the technical means of the present invention more clearly and implement the technical means according to the content of the specification, specific implementations of the present invention are further described in detail below with reference to the drawings and embodiments. The following embodiments are used to illustrate the present invention, but are not used to limit the scope of the present invention.

The embodiments describe in detail a lightweight large-capacity carrier box for miniature models. The box may be a box-shaped structure of any shape with a hollow interior. In specific embodiments, a square box-shaped structure is used as an example for description.

### First specific embodiment

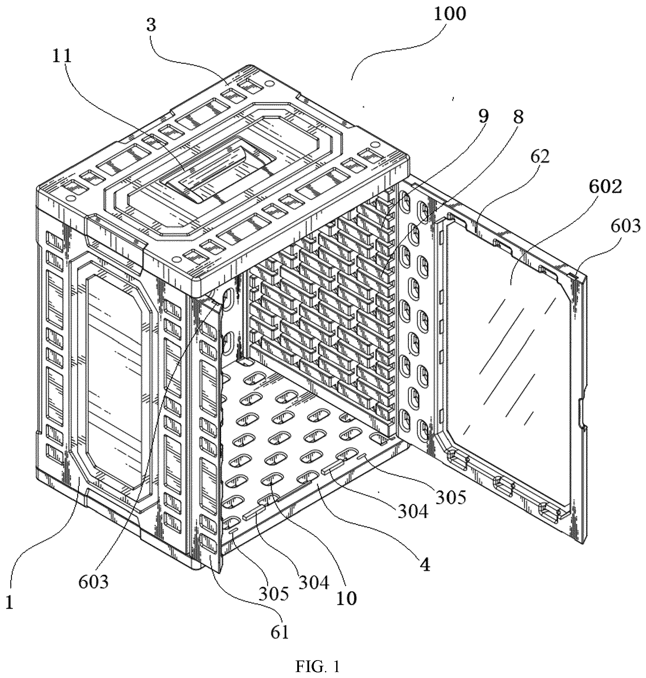

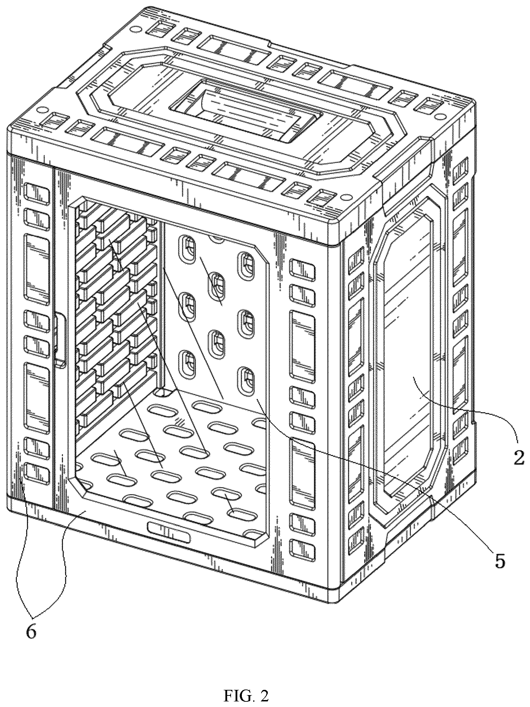

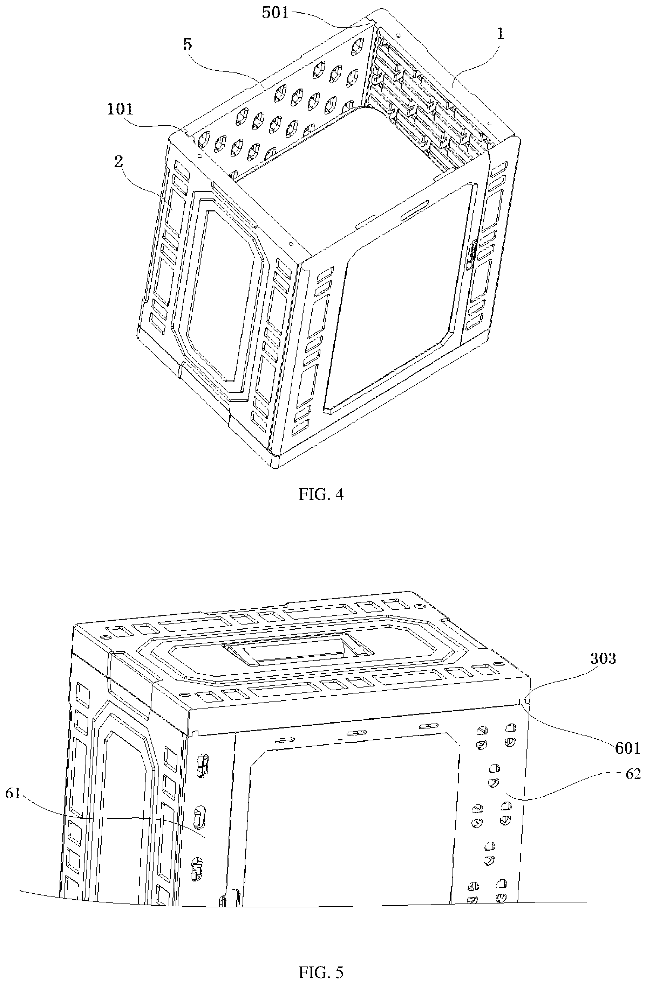

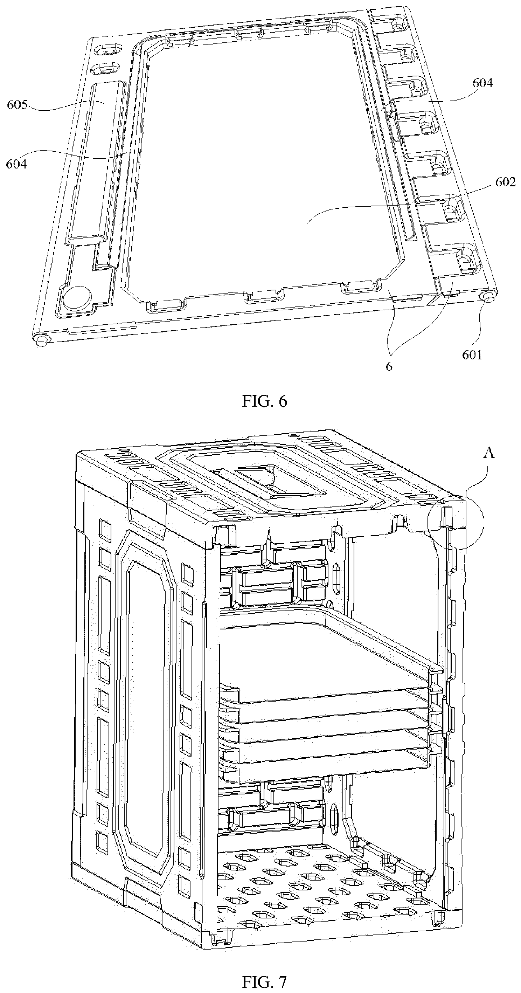

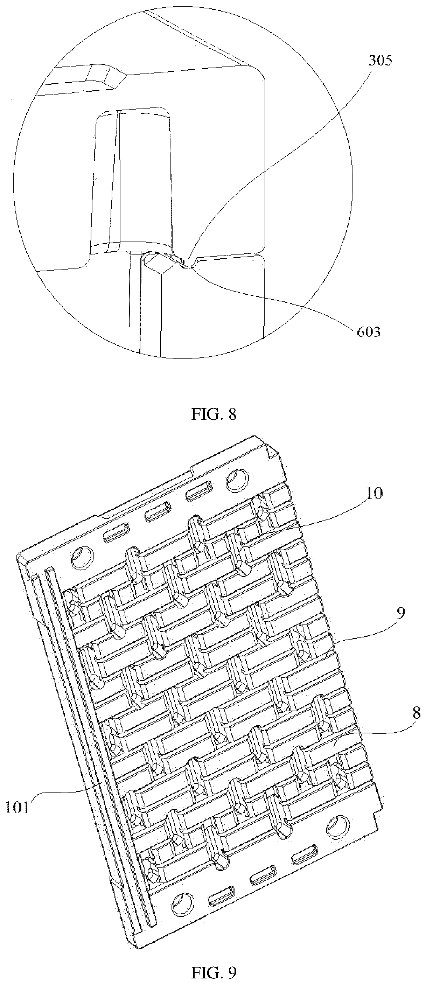

Refer to FIG. 1 to FIG. 9, the lightweight large-capacity carrier box for miniature models includes a box body 100 provided with a box door on a circumferential surface. The box body 100 includes several lightweight panels. The several lightweight panels are all hollow double-layer panels, which may be hollow double-layer plastic panels or hollow double-layer metal thin panels, so that a material that can achieve a lightweight purpose forms the hollow double-layer panels. In this specific embodiment, the internal hollow double-layer plastic panels are formed by blow molding.

The box body is formed by splicing the several hollow double-layer plastic panels. In this specific embodiment, the box body 100 has a square box-shaped structure and includes five of the above double-layer plastic panels, namely, a left side panel 1, a right side panel 2, a top panel 3, a bottom panel 4, and a rear panel 5. The five double-layer plastic panels and the box door 6 form six sides of the square box.

The left side panel 1 and the right side panel 2 are disposed opposite to each other, and the rear panel 5 is inserted and assembled at rear ends between the left side panel 1 and the right side panel 2. A specific structure may be that side surfaces at the rear ends between the left side panel and the right side panel are provided with corresponding slots 101, and two side edges of the rear panel 5 are both provided with inserted parts 501 matching the slots. The inserted parts are assembled into the slots by inserting, so that the left side panel 1 and the right side panel 2 are assembled together by using the rear panel 5.

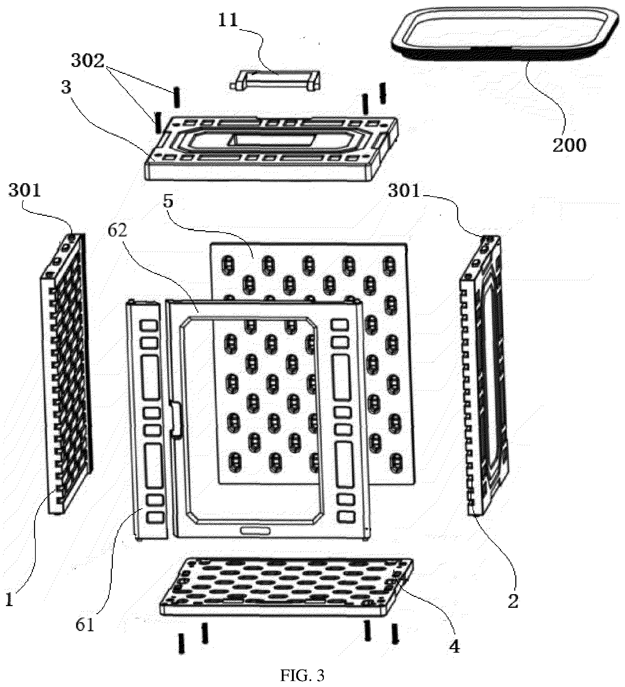

The top panel 3 is detachably and firmly connected to tops of the left side panel 1 and the right side panel 2, and the bottom panel 4 is also detachably and firmly connected to bottoms of the left side panel and the right side panel. A specific detachable and firm connection structure is as follows, as shown in FIG. 3.

End surfaces at the tops and bottoms of the left side panel 1 and the right side panel 2 are respectively pre-embedded with pre-embedded nuts 301 for detachably fastening the top panel 3 and the bottom panel 4, and pre-embedded positions may be corresponding to four corners of the top panel 3 and the bottom panel 4, or may be arranged along cross sections of the whole left side panel 1 and right side panel 2. Positions on the top panel 3 and the bottom panel 4 and corresponding to the pre-embedded nuts 301 are provided with through holes, and threaded connectors 302 (such as bolts) may be used to penetrate the through holes and be connected to the pre-embedded nuts 301, so that the top panel 3 and the bottom panel 4 are firmly connected to the top and bottom respectively. The nuts are pre-embedded, so that the top panel 3 and the bottom panel 4 are fastened more firmly and are not easy to fall compared with a conventional manner in which threaded holes are provided on plastic panels and connection is performed by threaded connectors.

The box door 6 is rotatably connected to front ends of the left side panel and/or the right side panel. The box door may be a lightweight panel that is rotatably connected to a side surface of the box body as a door panel, or may be two lightweight panels that are rotatably connected to a lightweight panel on a side surface of the box body as the door panels. In this specific embodiment, the latter is used. The box door 6 includes a front small door opening panel 61 and a front large door opening panel 62 that are rotatably connected to front ends of two opposite lightweight panels of the box body 100.

The front small door opening panel 61 is rotatably connected to a front end of the left side panel 1, the front large door opening panel 62 is rotatably connected to a front end of the right side panel 2, and the front small door opening panel and the large door opening panel are buckled together to form the above box door 6. A specific structure of rotating connection may be as follows: protruding rotating shafts 601 are formed on a top surface and bottom surface of the front small door opening panel 61 and the front large door opening panel 62 (the rotating shafts 601, the front small door opening panel, and the front large door opening panel may be integrally formed or may be separately formed, and an integrally formed structure is used in this embodiment). Positions on the top panel 3 and the bottom panel 4 and corresponding to the rotating shafts 601 are provided with rotating shaft grooves 303. The rotating shafts are axially limited in the rotating shaft grooves, so that the front small door opening panel and large door opening panel can rotate around the rotating shafts to implement door opening and door closing. When in use, the front large door opening panel and the front small door opening panel can be opened toward two sides; and the front large door opening panel 62 is provided with a transparent window 602 to facilitate observing a situation in the box. When the box door 6 is only a lightweight panel as a door panel, a structure of rotating connection is consistent with the above situation, and the transparent window 602 is opened only on the lightweight panel.

In addition, on two opposite inner side surfaces of the top panel 3 and the bottom panel 4, limiting strips 304 that are convex and block-shaped are formed corresponding to inner side surfaces of the front small door opening panel 61 and the front large door opening panel 62 respectively. The limiting strips respectively stop at the tops and bottoms of the inner side surfaces of the two door panels, so that the two door panels cannot rotate toward the inside of the box along rotating shafts 601 of the two door panels, thereby preventing the door panels from being recessed because a user closes the box with an excessive force. A shape of the convex block-shaped structure of the above limiting strip 304 and close to the inner side surface of the door panel matches the inner side surface of the door panel. For example, in this specific embodiment, the inner side surface of the door panel is a vertical plane, and a corresponding surface of the limiting strip is also a vertical panel.

In addition, on the two opposite inner side surfaces of the top panel 3 and the bottom panel 4, protruding chucks 305 that are convex are formed respectively corresponding to top end faces and the bottom end faces of the front small door opening panel 61 and the front large door opening panel 62; and matching chuck grooves 603 that are concave are formed on the top end face and the bottom end face of the box door 6 and corresponding to the protruding chucks 305. When the two door panels of the box door are closed, the protruding chucks 305 enter the chuck grooves 603 and are limited in the chuck grooves, so that the door panel can be closed tightly and positioned in place. In this way, when the box is carried during walking, the door panel is not opened due to shaking. In this specific embodiment, the protruding chucks 305 are in strip-shaped structures, and a radial cross-section of the strip-shaped structure is semicircular, that is, an outer surface of the protruding chuck is an arc surface. The corresponding chuck grooves 603 are strip-shaped grooves corresponding to the protruding chucks, and radial sections of the strip-shaped grooves are bowl-shaped structures matching the protruding chucks, and the bottoms of the bowl-shaped structures are flat, and both sides extend upward along two sides of the plane to form concave surfaces. The depths of the chuck grooves are not less than the heights of the protruding chucks. In this way, when the panel is pushed to the protruding chucks, the protruding chucks use elasticity of plastic parts and the arc surface structure to smoothly enter the chuck grooves. When the box is carried for movement, the protruding chucks 305 are difficult to slide out of the chuck grooves 603, thereby implementing positioning of the door panel.

In addition, in this specific embodiment, two protruding chucks 305 are provided on the bottom panel or the top panel. The two protruding chucks 305 correspond to the front small door opening panel 61 and the front small door opening panel 62 respectively, and are arranged symmetrically on the bottom panel 3 or the top panel 4. In this way, if the user has requirements for a direction in which the box door is opened, the front large door opening panel and the front small door opening panel of the box can be exchanged at will during assembly, and the protruding chucks and the corresponding chuck grooves can play corresponding roles. When only one box door is provided, only one protruding chuck 305 may be provided.

To clearly see placement of articles in the box in case of dim light, the present invention further provides an illumination light strip 604 around a periphery of the transparent window 602 on an inner side surface of the box door 6. An illumination surface of the illumination light strip 604 is obliquely disposed toward the transparent window 602. More specifically, an LED light strip may be selected for the illumination light strip, and two LED light strips are vertically embedded at both sides of the transparent window on the inner side surface of the box door. An irradiation surface of the illumination light strip faces the inside of the box body, and an angle at which the irradiation surface is inclined is preferably 45°, so that a maximum range of an inner region of the box body can be illuminated by a light strip with the same brightness. In addition, a battery box 605 for holding a dry battery is also disposed on an inner side of the box door provided with the LED light strip. Electrical contacts disposed in the battery box communicate with the LED strip through wires, and a switch button is disposed on a communication line, and a push end of the switch button is disposed on an outer side surface of the box door.

Several goods sliding grooves 9 are symmetrically formed on opposite surfaces of the lightweight panels located on two sides of the box door of the box body 100. The several goods sliding grooves 9 are disposed in a horizontal direction, and a tray 200 is erected between two goods sliding grooves that are symmetrically horizontally arranged. The tray can be pulled and pushed in a direction of the box door. The goods sliding groove 9 is formed in such a way in which several small protruding blocks 8 are formed on the lightweight panels on which the goods sliding grooves 9 are located, and the goods sliding grooves 9 are formed between two adjacent rows of the small protruding blocks 8. In this specific embodiment, the small protruding blocks 8 are in strip structures, and a length direction of the small protruding blocks with the strip structures are arranged along a push-pull direction of the tray 200. The small protruding blocks 8 are specifically disposed on two opposite inner side surfaces of the left side panel 1 and the right side panel 2, to bespread the entire inner side surfaces. When the above small protruding blocks are disposed, the small protruding blocks can be arranged in group of upper and lower rows or in a single row. In addition, a length of the small protruding blocks may be the same as or shorter than a width of the left side panel 1 or the right side panel 2 (that is, in the pull-push direction of the tray).

A height of the several small protruding blocks 8 in a vertical direction is 1-2cm, preferably 1cm, and a height of each row of small protruding blocks is consistent. A width of the goods sliding groove 9 is 0.2-0.8cm, most preferably 0.5cm. The height of the small protruding blocks 8 and the width of the goods sliding grooves 9 are designed, so that a height position of the tray 200 in the box can be finely adjusted, to adapt to miniature models with different heights, and prevent the waste of space in the box.

In addition, considering carrying portability, the five panels and the box door that form the box body 100 are all plastic panels or metal sheets, and are hollow double-layer panels, so the strength is not high. To resolve the technical problem and increase the firmness of the box, in addition to increase of the strength of the double-layer hollow panels by arranging the small protruding blocks 8 on the opposite inner side surfaces of the left side panel 1 and the right side panel 2, a several reinforcing grooves 10 arranged at intervals can also be formed on the inner side surfaces of the double-layer hollow panels forming the box body 100. In this specific embodiment, the reinforcing grooves 10 have long waist-shaped structures, and the reinforcing grooves are arranged in a same direction on a same double-layer hollow panel. For example, a length direction of the reinforcing grooves 10 on the inner side surfaces of the top panel 3 and the bottom panel 4 is the same as a length direction of the panels. The length direction of the reinforcing grooves 10 on inner side surfaces of the rear panel 5 and the box door 6 (such as a single box door or the front large door opening panel 62) is arranged vertically. A direction of the reinforcing grooves 10 on an inner side surface of the front small door opening panel 61 is the same as a width direction of the front small door opening panel. An included angle is formed between an arrangement direction of the several reinforcing grooves 10 located on opposite surfaces of the double-layer hollow panels on both sides of the box door (that is, on the inner side surfaces of the left side panel 1 and the right side panel 2) and a length direction of the goods sliding grooves 9, and the included angle is preferably 90°. To be specific, the length direction of the reinforcing grooves 10 with the long waist-shaped structures is perpendicular to the length direction of the goods sliding grooves 9. Through arrangement and an arrangement manner for the small protruding blocks 8 and the reinforcing grooves 10, the strength of the plastic panel can be increased, and concave deformation of the flat plastic panel after being stressed can be prevented.

In addition, in this specific embodiment, the small protruding blocks 8 are arranged in a manner in which the small protruding blocks 8 are shorter than the width direction of the side panel and are arranged in group of two adjacent rows, as shown in FIG. 1. The small protruding blocks in left and right adjacent groups are separated by the arranged reinforcing grooves 10. In this arrangement manner, the reinforcing grooves 10 are arranged to break the small protruding blocks arranged along the width direction of the side panel, which can effectively prevent the stress deformation of the panel.

The top of the box body 100 is positioned with a handle 11 that can rotate movably. The handle 11 includes a lifting and holding part 1101 and a fastening part 1102. Grooves 102 are respectively formed on the inner side surface of the top of the box body 100 and corresponding to two free ends 1101a of the lifting and holding part. The two free ends 1101a of the lifting and holding parts 1101 respectively pass through side walls of the corresponding grooves 102 and are rotatably connected to the fastening part 1102. The fastening part 1102 is a fastening sleeve, which has a rod-shaped structure with hollow ends or hollow interior. Two ends of the fastening sleeve are respectively sleeved and in threaded connection with the two free ends 1101a. The fastening sleeve is firmly connected to the top of the box body 100, and a specific connection manner is as follows: the fastening part 1102 is provided with threaded holes, two of the threaded holes are provided at intervals in this embodiment, and each threaded hole is correspondingly provided with a threaded connector 1105, and the threaded connector 1105 sequentially passes through a gasket 1106 and a lightweight panel at the top of the box body, and then is screwed into the threaded hole, to firmly connect the fastening sleeve to the top of the box body. In this way, the handle can be more firmly fastened on the box body.

In this specific embodiment, the reinforcing grooves arranged on the inner side surface of the top panel can be used as the grooves for positioning the lifting and holding part of the handle. In this way, when the lifting and holding part of the handle is positioned, first, the two free ends pass through side walls of the grooves, and parts penetrating out of the two free ends are close to bottoms of the grooves. Compared with the structure in the prior art that the two free ends of the handle for rotation are disposed in a hollow cavity in the middle of a double-layer plastic panel, and only the two free ends of the handle are supported by using a single-layer plastic panel, two stress positions may be added because the two plastic panels are penetrated when the side walls of the grooves are penetrated. In addition, due to the arrangement of the grooves, the plastic panel located above the rotating part has two sides, and the total thickness can be doubled, thus increasing a bearing capacity of the handle. Two firm connection points are added, which can make the handle more firmly fastened on the top panel.

In this application, a quantity of the trays 200 may be set based on a miniature height and space separation. In this specific embodiment, there are five trays which are independently and movably disposed in the goods sliding grooves 9. The tray 200 has a tray-shaped structure that can magnetically attract the miniature model, and a shape of the tray matches a cross section of the box body. The tray 200 may be made of a magnet, a composite material formed by adding a magnet to a lightweight material, or a structure in which a magnet adsorption layer is formed on a surface of a conventional tray. The tray may alternatively be made of a metal material (such as iron) capable of adsorbing with a magnet, a lightweight composite material mixed with a metal material capable of adsorbing with a magnet, or a conventional tray of which a placing surface is provided with a metal material layer capable of adsorbing with a magnet. When the tray 200 is used in conjunction with the miniature model, usually, a magnet block may be usually added below the miniature model, so that the miniature model can be firmly magnetically attracted to the tray when placed on the tray, thus preventing the miniature models from moving and colliding during carrying of the box. In this specific embodiment, considering the lightweight requirements for the entire box, the tray is usually made of an iron sheet.

### Second specific embodiment

Other structures of the second specific embodiment 2 are the same as the structures described in the first embodiment, but differences are as follows:

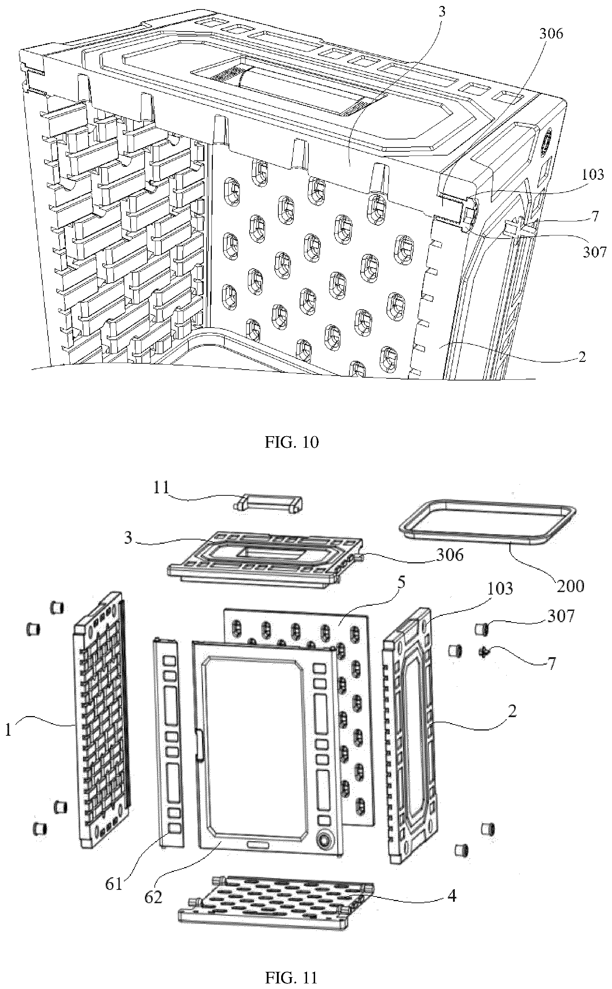

A top panel 3 is detachably and firmly connected to tops of a left side panel 1 and a right side panel 2, and a bottom panel 4 is also detachably and firmly connected to bottoms of the left side panel and the right side panel. A specific structure of detachable and firm connection may also be described as follows, as shown in FIG. 10 and FIG. 11.

First threaded connectors 306 protruding outward toward the left side panel 1 and the right side panel 2 are respectively formed on side edges of the top panel 3 and the bottom panel 4. The first threaded connectors may be integrally formed with the top panel 3 or the bottom panel 4, or may be connected to the top panel 3 or the bottom panel 4 by post-processing. The first threaded connectors 306 are screw members with external threads, there are at least two screw members, and the at least two screw members are arranged at intervals along a length direction of a side edge of the top panel or the bottom panel. Positions on the left side panel 1 and the right side panel 2 and corresponding to the first threaded connectors 306 are provided with counterbores 103, and it is designed that the second threaded connectors 307 are in threaded connection with the first threaded connectors 306 after passing through the counterbores 103, so that the left side panel 1 and the right side panel 2 are locked on the top panel 3 and the bottom panel 4. The second threaded connector 306 is a hexagonal countersunk head screw sleeve with an internal thread, which penetrates the counterbore 103 and is in threaded connection with an external thread of the screw member, and the side panel is locked on the top panel or the bottom panel through counterbores of the side panel and the countersunk structure of the screw sleeve. In this detachable assembling manner, the appearance is more clean and flat, and, it is more convenient to disassemble and assemble the box in a horizontal direction only by using a hexagon wrench 7, without inverting the box up and down.

### Third specific embodiment

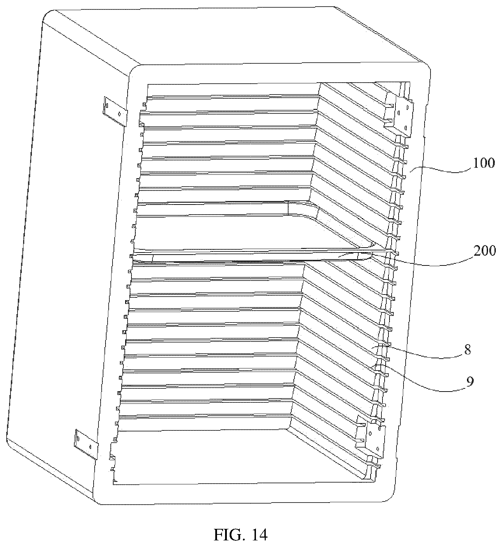

In this specific embodiment, a lightweight panel used for a box body 100 is a lightweight plastic foam board which is made of common foamed plastics (such as expanded polystyrene, or the like), and which may be a high-density lightweight plastic foam board. When the lightweight plastic foam board is used, the box body has an integrated structure. When in use, the box may be matched with a shoulder strap bag or a handle bag wrapped outside the box. In this case, the box door may alternatively be the lightweight plastic foam board, and for connection with the box body, the box door may be rotatably connected to a side wall of the box body by hinge structure. When the box body is made of the light plastic foam board, because the box body has a solid structure, no reinforcing groove is provided on each lightweight panel. Other structures are the same as structures mentioned in the first specific embodiment. See FIG. 14 of the specification for details.

The above is only preferred implementations of the present invention and is not used to limit the present invention. It should be note that a person skilled in the art can make several improvements and variations without departing from the technical principles of the present invention. The scope of protection is defined by the appended claims.

## Claims

1. A lightweight large-capacity carrier box for miniature models used by tabletop wargame players, comprising a box body (100) provided with a box door (6) on a circumferential surface, wherein the box body (100) comprises several lightweight panels, several goods sliding grooves (9) are symmetrically formed on opposite surfaces of the lightweight panels located on two sides of the box door (6) of the box body (100), the several goods sliding grooves (9) are disposed in a horizontal direction, a tray (200) is erected between two goods sliding grooves (9) that are symmetrically horizontally arranged, the tray (200) is capable of being pulled and pushed in a direction of the box door (6), the shape of the tray (200) matches the cross section of the box body (100), **characterised in that** the tray (200) has a tray-shaped structure that is capable, in use, of magnetically attracting a miniature model, several small protruding blocks (8) are formed on the lightweight panels on which the goods sliding grooves (9) are located, and the goods sliding grooves (9) are formed between two adjacent rows of small protruding blocks (8).

2. The lightweight large-capacity carrier box according to claim 1, wherein a height of the several small protruding blocks (8) in a vertical direction is 1-2cm, and a height of each row of the small protruding blocks (8) is consistent, and a width of the goods sliding groove (9) is 0.2-0.8cm.

3. The lightweight large-capacity carrier box according to any one of claim 1 or 2, wherein the lightweight panel is a hollow double-layer panel, and the box body (100) is formed by splicing several of the double-layer panels, and several reinforcing grooves (10) are formed on inner side surfaces of the double-layer panels, and the several reinforcing grooves (10) are staggered at intervals.

4. The lightweight large-capacity carrier box according to claim 3, wherein the reinforcing grooves (10) have long waist-shaped structures, and the reinforcing grooves (10) are arranged in a same direction on a same double-layer panel.

5. The lightweight large-capacity carrier box according to claim 4, wherein an included angle is formed between an arrangement direction of the several reinforcing grooves (10) located on opposite surfaces of the double-layer panels on both sides of the box door (6) and a length direction of the goods sliding grooves (9), and the included angle is preferably 90°.

6. The lightweight large-capacity carrier box according to any one of claims 3 to 5, wherein the box body (100) has a square box-shaped structure, and the square box-shaped structure comprises a left side panel (1) and a right side panel (2) which are oppositely arranged, a rear panel (5) is inserted and assembled at rear ends between the left side panel (1) and the right side panel, a top panel (3) is detachably and firmly connected to tops of the left side panel (1) and the right side panel (2), a bottom panel (4) is detachably and firmly connected to bottoms of the left side panel and the right side panel, and front ends of the left side panel and/or right side panel are rotatably connected to the box door (6).

7. The lightweight large-capacity carrier box according to claim 5, wherein end surfaces at the tops and bottoms of the left side panel (1) and the right side panel (2) are respectively pre-embedded with pre-embedded nuts (301) for detachably fastening the top panel (3) and the bottom panel (4), and the top panel (3) and the bottom panel (4) are respectively in threaded connection with the pre-embedded nuts (301) through threaded connectors (302).

8. The lightweight large-capacity carrier box according to claim 6, wherein side edges of the top panel (3) and the bottom panel (4) are provided with first threaded connectors (306) protruding toward the left side panel (1) and the right side panel (2) respectively, corresponding positions of the left side panel (1) and the right side panel (2) are provided with counterbores (103), and second threaded connectors (307) are in threaded connection with the first threaded connectors (306) after passing through the counterbores (103), so that the left side panel (1) and the right side panel (2) are locked on the top panel (3) and the bottom panel (4).

9. The lightweight large-capacity carrier box according to any one of claim 1 or 2, wherein the lightweight panel is a lightweight plastic foam board, and the box body (100) is integrally formed by several lightweight plastic foam boards.

10. The lightweight large-capacity carrier box according to any one of claims 1 to 9, wherein the box door (6) is provided with a transparent window (602), an illumination light strip (604) is disposed around a periphery of the transparent window (602) on an inner side surface of the box door (6), and an illumination surface of the illumination light strip (604) is obliquely disposed toward the transparent window.

11. The lightweight large-capacity carrier box according to any one of claims 1 to 10, wherein limiting strips (304) that are convex and block-shaped are respectively formed on two inner side surfaces of a top and bottom of the box body (100), and the limiting strips (304) respectively stop at the top and bottom of inner side surfaces of the box door (6).

12. The lightweight large-capacity carrier box according to any one of claims 1 to 10, wherein chuck grooves (603) are respectively formed at a top end face and a bottom end face of the box door (6); and positions on the inner side surfaces of the top and bottom of the box body (100) and corresponding to the chuck grooves (603) are respectively provided with protruding chucks (305) that are convex, and the protruding chucks (305) are capable of being elastically clamped into the corresponding chuck grooves (603) and are limited in the chuck grooves (603).

13. The lightweight large-capacity carrier box according to any one of claims 1 to 12, wherein the box door (6) comprises one or two door panels rotatably connected to a lightweight panel on a side surface of the box body (100), and preferably, the box door (6) comprises a front small door opening panel (61) and a front large door opening panel (62) that are rotatably connected to front ends of two opposite lightweight panels of the box body (100).

14. The lightweight large-capacity carrier box according to any one of claims 1 to 13, wherein the top of the box body (100) is positioned with a handle (11), the handle comprises a lifting and holding part (1101) and a fastening part (1102), and the fastening part is firmly connected to the top of the box body (100); and grooves (102) are respectively formed on the inner side surface of the top of the box body (100) and corresponding to two free ends of the lifting and holding part, the two free ends (1101a) of the lifting and holding parts respectively pass through side walls of the corresponding grooves and are rotatably connected to the fastening part (1102).

## Patentansprüche

1. Eine leichte Transportbox mit großem Fassungsvermögen für Miniaturmodelle (100), die von Tabletop-Kriegsspielern verwendet wird, umfassend einen Boxkörper (100), der an einer Umfangsfläche mit einer Boxtür (6) versehen ist, wobei der Boxkörper (100) mehrere Leichtbauplatten umfasst, mehrere Gleitnuten (9) symmetrisch auf gegenüberliegenden Oberflächen der Leichtbauplatten ausgebildet sind, die sich auf beiden Seiten der Boxtür (6) des Boxkörpers (100) befinden, die mehreren Gleitnuten (9) in horizontaler Richtung angeordnet sind, ein Tablett (200) zwischen zwei symmetrisch horizontal angeordneten Gleitnuten (9) angeordnet ist, das Tablett (200) in Richtung der Boxtür (6) gezogen und geschoben werden kann, die Form des Tabletts (200) dem Querschnitt des Boxkörpers (100) entspricht,
**dadurch gekennzeichnet, dass** das Tablett (200) eine tablettförmige Struktur aufweist, die im Gebrauch in der Lage ist, ein Miniaturmodell magnetisch anzuziehen, mehrere kleine vorstehende Blöcke (8) auf den Leichtbauplatten ausgebildet sind, auf denen sich die Gleitnuten (9) befinden, und die Gleitnuten (9) zwischen zwei benachbarten Reihen kleiner vorstehender Blöcke (8) ausgebildet sind.

2. Die leichte Transportbox mit großem Fassungsvermögen nach Anspruch 1, wobei eine Höhe der mehreren kleinen vorstehenden Blöcke (8) in vertikaler Richtung 1-2 cm beträgt, und eine Höhe jeder Reihe der kleinen vorstehenden Blöcke (8) einheitlich ist, und eine Breite der Gleitnut (9) 0.2-0.8 cm beträgt.

3. Die leichte Transportbox mit großem Fassungsvermögen nach einem der Ansprüche 1 oder 2, wobei die Leichtbauplatte eine hohle doppelschichtige Platte ist, und der Boxkörper (100) durch Zusammenfügen mehrerer der doppelschichtigen Platten gebildet ist, und mehrere Verstärkungsnuten (10) auf den inneren Seitenflächen der doppelschichtigen Platten ausgebildet sind, und die mehreren Verstärkungsnuten (10) in Abständen versetzt sind.

4. Die leichte Transportbox mit großem Fassungsvermögen nach Anspruch 3, wobei die Verstärkungsnuten (10) lange, taillenförmige Strukturen aufweisen und die Verstärkungsnuten (10) auf derselben doppelschichtigen Platte in derselben Richtung angeordnet sind.

5. Die leichte Transportbox mit großem Fassungsvermögen nach Anspruch 4, wobei ein eingeschlossener Winkel zwischen einer Anordnungsrichtung der mehreren Verstärkungsnuten (10), die sich auf gegenüberliegenden Oberflächen der doppelschichtigen Platten auf beiden Seiten der Boxtür (6) befinden, und einer Längsrichtung der Gleitnuten (9) ausgebildet ist, und der eingeschlossene Winkel vorzugsweise 90° beträgt.

6. Die leichte Transportbox mit großem Fassungsvermögen nach einem der Ansprüche 3 bis 5, wobei der Boxkörper (100) eine quadratische, kastenförmige Struktur aufweist, und die quadratische, kastenförmige Struktur eine linke Seitenplatte (1) und eine rechte Seitenplatte (2) umfasst, die gegenüberliegend angeordnet sind, eine Rückplatte (5) an den hinteren Enden zwischen der linken Seitenplatte (1) und der rechten Seitenplatte eingesetzt und montiert ist, eine obere Platte (3) lösbar und fest mit den Oberseiten der linken Seitenplatte (1) und der rechten Seitenplatte (2) verbunden ist, eine untere Platte (4) lösbar und fest mit den Unterseiten der linken Seitenplatte und der rechten Seitenplatte verbunden ist, und die vorderen Enden der linken Seitenplatte und/oder der rechten Seitenplatte drehbar mit der Boxtür (6) verbunden sind.

7. Die leichte Transportbox mit großem Fassungsvermögen nach Anspruch 5, wobei die Endflächen an den Ober- und Unterseiten der linken Seitenplatte (1) und der rechten Seitenplatte (2) jeweils mit vor-eingebetteten Muttern (301) zum lösbaren Befestigen der oberen Platte (3) und der unteren Platte (4) versehen sind, und die obere Platte (3) und die untere Platte (4) jeweils mittels Gewindeverbindern (302) in Gewindeverbindung mit den vor-eingebetteten Muttern (301) stehen.

8. Die leichte Transportbox mit großem Fassungsvermögen nach Anspruch 6, wobei die Seitenkanten der oberen Platte (3) und der unteren Platte (4) jeweils mit ersten Gewindeverbindern (306) versehen sind, die in Richtung der linken Seitenplatte (1) beziehungsweise der rechten Seitenplatte (2) vorstehen, entsprechende Positionen der linken Seitenplatte (1) und der rechten Seitenplatte (2) mit Senkbohrungen (103) versehen sind, und zweite Gewindeverbinder (307) nach dem Durchgang durch die Senkbohrungen (103) in Gewindeverbindung mit den ersten Gewindeverbindern (306) stehen, so dass die linke Seitenplatte (1) und die rechte Seitenplatte (2) an der oberen Platte (3) und der unteren Platte (4) verriegelt sind.

9. Die leichte Transportbox mit großem Fassungsvermögen nach einem der Ansprüche 1 oder 2, wobei die Leichtbauplatte eine leichte Kunststoff-Hartschaumplatte ist und der Boxkörper (100) aus mehreren leichten Kunststoff-Hartschaumplatten einstückig ausgebildet ist.

10. Die leichte Transportbox mit großem Fassungsvermögen nach einem der Ansprüche 1 bis 9, wobei die Boxtür (6) mit einem transparenten Fenster (602) versehen ist, eine Beleuchtungs-Lichtleiste (604) um einen Umfang des transparenten Fensters (602) herum auf einer inneren Seitenfläche der Boxtür (6) angeordnet ist, und eine Beleuchtungsfläche der Beleuchtungs-Lichtleiste (604) schräg zum transparenten Fenster hin angeordnet ist.

11. Die leichte Transportbox mit großem Fassungsvermögen nach einem der Ansprüche 1 bis 10, wobei Begrenzungsleisten (304), die konvex und blockförmig sind, jeweils an zwei inneren Seitenflächen einer Ober- und Unterseite des Boxkörpers (100) ausgebildet sind, und die Begrenzungsleisten (304) jeweils an der Ober- und Unterseite der inneren Seitenflächen der Boxtür (6) anstoßen.

12. Die leichte Transportbox mit großem Fassungsvermögen nach einem der Ansprüche 1 bis 10, wobei Spannnuten (603) jeweils an einer oberen Stirnfläche und einer unteren Stirnfläche der Boxtür (6) ausgebildet sind; und Positionen an den inneren Seitenflächen der Ober- und Unterseite des Boxkörpers (100), die den Spannnuten (603) entsprechen, jeweils mit vorstehenden Spannelementen (305) versehen sind, die konvex sind, und die vorstehenden Spannelemente (305) in die entsprechenden Spannnuten (603) elastisch geklemmt werden können und in den Spannnuten (603) gehalten sind.

13. Die leichte Transportbox mit großem Fassungsvermögen nach einem der Ansprüche 1 bis 12, wobei die Boxtür (6) eine oder zwei Türplatten umfasst, die drehbar mit einer Leichtbauplatte an einer Seitenfläche des Boxkörpers (100) verbunden sind, und vorzugsweise die Boxtür (6) eine vordere kleine Türöffnungsplatte (61) und eine vordere große Türöffnungsplatte (62) umfasst, die drehbar mit den vorderen Enden von zwei gegenüberliegenden Leichtbauplatten des Boxkörpers (100) verbunden sind.

14. Die leichte Transportbox mit großem Fassungsvermögen nach einem der Ansprüche 1 bis 13, wobei an der Oberseite des Boxkörpers (100) ein Griff (11) positioniert ist, der Griff ein Hebe- und Halteteil (1101) und ein Befestigungsteil (1102) umfasst, und das Befestigungsteil fest mit der Oberseite des Boxkörpers (100) verbunden ist; und Nuten (102) jeweils an der inneren Seitenfläche der Oberseite des Boxkörpers (100) und entsprechend zwei freien Enden des Hebe- und Halteteils ausgebildet sind, wobei die beiden freien Enden (1101a) der Hebe- und Halteteile jeweils durch Seitenwände der entsprechenden Nuten hindurchgehen und drehbar mit dem Befestigungsteil (1102) verbunden sind.

## Revendications

1. Une boîte de transport légère et de grande capacité pour les modèles miniatures utilisée par les joueurs de jeux de guerre sur table, comprenant un corps de boîte (100) muni d'une porte de boîte (6) sur une surface circonférentielle, dans laquelle le corps de boîte (100) comprend plusieurs panneaux légers, plusieurs rainures de glissement de marchandises (9) sont formées symétriquement sur des surfaces opposées des panneaux légers situés des deux côtés de la porte de boîte (6) du corps de boîte (100), les plusieurs rainures de glissement de marchandises (9) sont disposées dans une direction horizontale, un plateau (200) est monté entre deux rainures de glissement de marchandises (9) qui sont agencées symétriquement horizontalement, le plateau (200) peut être tiré et poussé dans une direction de la porte de boîte (6), la forme du plateau (200) correspond à la section transversale du corps de boîte (100),
**caractérisée en ce que** le plateau (200) a une structure en forme de plateau qui est capable, en utilisation, d'attirer magnétiquement un modèle miniature, plusieurs petits blocs en saillie (8) sont formés sur les panneaux légers sur lesquels les rainures de glissement de marchandises (9) sont situées, et les rainures de glissement de marchandises (9) sont formées entre deux rangées adjacentes de petits blocs en saillie (8).

2. La boîte de transport légère et de grande capacité selon la revendication 1, dans laquelle une hauteur des plusieurs petits blocs en saillie (8) dans une direction verticale est de 1 à 2 cm, et une hauteur de chaque rangée des petits blocs en saillie (8) est uniforme, et une largeur de la rainure de glissement de marchandises (9) est de 0.2 à 0.8 cm.

3. La boîte de transport légère et de grande capacité selon l'une quelconque des revendications 1 ou 2, dans laquelle le panneau léger est un panneau creux à double couche, et le corps de boîte (100) est formé par l'assemblage de plusieurs des panneaux à double couche, et plusieurs rainures de renforcement (10) sont formées sur les surfaces latérales intérieures des panneaux à double couche, et les plusieurs rainures de renforcement (10) sont décalées à intervalles.

4. La boîte de transport légère et de grande capacité selon la revendication 3, dans laquelle les rainures de renforcement (10) ont des structures allongées en forme de taille, et les rainures de renforcement (10) sont agencées dans une même direction sur un même panneau à double couche.

5. La boîte de transport légère et de grande capacité selon la revendication 4, dans laquelle un angle inclus est formé entre une direction d'agencement des plusieurs rainures de renforcement (10) situées sur des surfaces opposées des panneaux à double couche des deux côtés de la porte de boîte (6) et une direction de la longueur des rainures de glissement de marchandises (9), et l'angle inclus est de préférence de 90°.

6. La boîte de transport légère et de grande capacité selon l'une quelconque des revendications 3 à 5, dans laquelle le corps de boîte (100) a une structure en forme de boîte carrée, et la structure en forme de boîte carrée comprend un panneau latéral gauche (1) et un panneau latéral droit (2) qui sont agencés de manière opposée, un panneau arrière (5) est inséré et assemblé aux extrémités arrière entre le panneau latéral gauche (1) et le panneau latéral droit, un panneau supérieur (3) est connecté de manière amovible et solide aux sommets du panneau latéral gauche (1) et du panneau latéral droit (2), un panneau inférieur (4) est connecté de manière amovible et solide aux bases du panneau latéral gauche et du panneau latéral droit, et les extrémités avant du panneau latéral gauche et/ou du panneau latéral droit sont connectées de manière rotative à la porte de boîte (6).

7. La boîte de transport légère et de grande capacité selon la revendication 5, dans laquelle des surfaces d'extrémité aux sommets et aux bases du panneau latéral gauche (1) et du panneau latéral droit (2) sont respectivement pré-encastrées avec des écrous pré-encastrés (301) pour fixer de manière amovible le panneau supérieur (3) et le panneau inférieur (4), et le panneau supérieur (3) et le panneau inférieur (4) sont respectivement en liaison filetée avec les écrous pré-encastrés (301) par l'intermédiaire de connecteurs filetés (302).

8. La boîte de transport légère et de grande capacité selon la revendication 6, dans laquelle les bords latéraux du panneau supérieur (3) et du panneau inférieur (4) sont pourvus de premiers connecteurs filetés (306) faisant saillie vers le panneau latéral gauche (1) et le panneau latéral droit (2) respectivement, des positions correspondantes du panneau latéral gauche (1) et du panneau latéral droit (2) sont pourvues de lamages (103), et des deuxièmes connecteurs filetés (307) sont en liaison filetée avec les premiers connecteurs filetés (306) après avoir traversé les lamages (103), de sorte que le panneau latéral gauche (1) et le panneau latéral droit (2) sont verrouillés sur le panneau supérieur (3) et le panneau inférieur (4).

9. La boîte de transport légère et de grande capacité selon l'une quelconque des revendications 1 ou 2, dans laquelle le panneau léger est un panneau de mousse plastique légère, et le corps de boîte (100) est formé d'un seul tenant par plusieurs panneaux de mousse plastique légère.

10. La boîte de transport légère et de grande capacité selon l'une quelconque des revendications 1 à 9, dans laquelle la porte de boîte (6) est pourvue d'une fenêtre transparente (602), une bande lumineuse d'éclairage (604) est disposée autour d'une périphérie de la fenêtre transparente (602) sur une surface latérale intérieure de la porte de boîte (6), et une surface d'éclairage de la bande lumineuse d'éclairage (604) est disposée en oblique vers la fenêtre transparente.

11. La boîte de transport légère et de grande capacité selon l'une quelconque des revendications 1 à 10, dans laquelle des bandes de limitation (304) qui sont convexes et en forme de bloc sont respectivement formées sur deux surfaces latérales intérieures d'un sommet et d'une base du corps de boîte (100), et les bandes de limitation (304) s'arrêtent respectivement au sommet et à la base des surfaces latérales intérieures de la porte de boîte (6).

12. La boîte de transport légère et de grande capacité selon l'une quelconque des revendications 1 à 10, dans laquelle des rainures de mandrin (603) sont respectivement formées sur une face d'extrémité supérieure et une face d'extrémité inférieure de la porte de boîte (6); et des positions sur les surfaces latérales intérieures du sommet et de la base du corps de boîte (100) et correspondant aux rainures de mandrin (603) sont respectivement pourvues de mandrins en saillie (305) qui sont convexes, et les mandrins en saillie (305) sont capables d'être serrés élastiquement dans les rainures de mandrin (603) correspondantes et sont retenus dans les rainures de mandrin (603).

13. La boîte de transport légère et de grande capacité selon l'une quelconque des revendications 1 à 12, dans laquelle la porte de boîte (6) comprend un ou deux panneaux de porte connectés de manière rotative à un panneau léger sur une surface latérale du corps de boîte (100), et de préférence, la porte de boîte (6) comprend un petit panneau d'ouverture de porte avant (61) et un grand panneau d'ouverture de porte avant (62) qui sont connectés de manière rotative aux extrémités avant de deux panneaux légers opposés du corps de boîte (100).

14. La boîte de transport légère et de grande capacité selon l'une quelconque des revendications 1 à 13, dans laquelle le sommet du corps de boîte (100) est positionné avec une poignée (11), la poignée comprend une partie de levage et de maintien (1101) et une partie de fixation (1102), et la partie de fixation est connectée solidement au sommet du corps de boîte (100); et des rainures (102) sont respectivement formées sur la surface latérale intérieure du sommet du corps de boîte (100) et correspondant à deux extrémités libres de la partie de levage et de maintien, les deux extrémités libres (1101a) des parties de levage et de maintien traversent respectivement les parois latérales des rainures correspondantes et sont connectées de manière rotative à la partie de fixation (1102).
